# EUROPÄISCHE PATENTSCHRIFT

(11) **EP 0 681 521 B1**
(45) Veröffentlichungstag und Bekanntmachung des Hinweises auf die Patenterteilung: **31.03.1999**
(21) Anmeldenummer: 94926140.8
(22) Anmeldetag: 02.08.1994
(51) Int. Cl.: B29C 67/00, B29C 37/00

(54) **VERFAHREN UND VORRICHTUNG ZUM HERSTELLEN VON DREIDIMENSIONALEN OBJEKTEN**
PROCESS AND DEVICE FOR PRODUCING THREE-DIMENSIONAL OBJECTS
PROCEDE ET DISPOSITIF DE PRODUCTION D'OBJETS TRIDIMENSIONNELS

(30) Priorität: 11.08.1993 DE 4326986
(43) Veröffentlichungstag der Anmeldung: 15.11.1995
(73) Patentinhaber: EOS GmbH ELECTRO OPTICAL SYSTEMS, 82152 Planegg (DE)
(72) Erfinder: KELLER, Peter, D-82152 Martinsried (DE); WILKENING, Christian, D-86911 Diessen (DE); RETALLICK, Dave, D-8909 Münsterhausen (DE); LANGER, Hans, J., D-82166 Gräfelfing (DE)
(74) Vertreter: Prüfer, Lutz H., Dipl.-Phys.
(86) Internationale Anmeldenummer: EP9402559
(87) Internationale Veröffentlichungsnummer: WO9504647

(56) Entgegenhaltungen:
- EP-A- 0 322 257
- EP-A- 0 322 353
- EP-A- 0 450 762
- WO-A-93/08506
- WO-A-93/25376
- PATENT ABSTRACTS OF JAPAN vol. 14, no. 327 (M-998) (4270) 13. Juli 1990 & JP,A,02 111 528 (MATSUSHITA ELECTRIC WORKS LTD) 24. April 1990

## Beschreibung

Die Erfindung betrifft ein Verfahren zum Herstellen von dreidimensionalen Objekten nach dem Oberbegriff des Anspruchs 1 bzw. eine Vorrichtung zur Durchführung eines derartigen Verfahrens nach dem Oberbegriff des Anspruchs 10.

Ein Verfahren bzw. eine Vorrichtung zum Herstellen von dreidimensionalen Objekten ist beispielsweise aus der US 4 863 538 bekannt. Ein pulverförmiges Feststoffmaterial wird mittels einer Walze auf die Oberseite eines absenkbaren Trägers aufgetragen und durch Bestrahlung mit einem Laser an den dem Objekt entsprechenden Stellen gesintert. Bei dieser Sinterung schrumpft die Pulverschicht erheblich zusammen, sodaß die Schichtdicke der gesinterten Bereiche kleiner ist als vor der Auftragung und damit die Oberfläche der gesinterten Bereiche abgesenkt ist. Wird der Träger um die Schichtdicke der nächsten Schicht abgesenkt und wiederum eine Pulverschicht aufgetragen, so ist daher diese Pulverschicht an den zuvor gesinterten Bereichen dicker als an den übrigen Bereichen. Bei der nächsten Sinterung schrumpft daher das Material an diesen Bereichen verstärkt, sodaß sich der Schrumpffehler insgesamt aufsummiert und sogar soweit führen kann, daß die zu sinternde Schichtdicke so groß wird, daß es bei der Bestrahlung mit dem Laser nicht mehr möglich ist, die Schicht in ihrer gesamten Dicke zu sintern; damit geht der Kontakt dieser Schicht zur darunterliegenden Schicht und insgesamt der Zusammenhalt des hergestellten Objekts verloren.

Aus der WO 90/03893 ist es ferner bekannt, für einzelne der jeweils verfestigten Schichten unterschiedliches Pulvermaterial zu verwenden; ferner soll dort das Problem der Schrumpfung des Materials durch Verdichten des aufgetragenen Pulvermaterials beispielsweise mittels einer Walze gelöst werden. Durch eine derartige Verdichtung kann jedoch der Effekt der Schrumpfung nur geringfügig verringert und nicht im wesentlichen ausgeschaltet werden.

Aus der EP-A-0 322 257 ist ein Verfahren zum Herstellen von dreidimensionalen Objekten nach dem Oberbegriff des Anspruches 1 bekannt. Aus der EP-A-0 450 762 ist eine Vorrichtung zum Herstellen von dreidimensionalen Objekten nach dem Oberbegriff des Anspruches 10 bekannt. Aus der WO 93/08506 ist eine Vorrichtung zum Herstellen von dreidimensionalen Objekten, mit einem Träger, einer Vorrichtung zum Aufbringen einer Schicht eines Materials auf den Träger und einer Vorrichtung zum Verfestigen der aufgebrachten Materialschicht sowie ein Antrieb zum Bewegen der Aufbringvorrichtung über den Träger bekannt.

Es ist Aufgabe der Erfindung, ein Verfahren bzw. eine Vorrichtung der eingangs genannten Art so weiterzubilden, daß die obengenannten Nachteile vermieden und insbesondere Objekte mit erhöhter Dichte, größerer Genauigkeit bzw. besserer Oberflächenbeschaffenheit erzeugt werden.

Diese Aufgabe wird erfindungsgemäß durch ein Verfahren mit den Merkmalen des Anspruchs 1 bzw. durch eine Vorrichtung mit den Merkmalen des Anspruchs 10 gelöst.

Im Prinzip wird dem obengenannten Verstärkungseffekt der Schrumpfung dadurch begegnet, daß nach der Verfestigung einer Schicht, aber vor dem Absenken des Materialträgers zumindest eine weitere Materialschicht aufgetragen und erneut verfestigt wird; mit dem Auftragen wird das bei der ersten Bestrahlung durch den Schrumpf entstandene Loch mit Material gefüllt und dieses an denselben Stellen wie vorher wieder verfestigt. Damit bleibt nur noch ein je nach Zahl der zusätzlichen Schichten verringerter Restschrumpf übrig. Die Genauigkeit der Objekte sowie deren Dichte und damit Festigkeit wird durch diese zumindest doppelte Verfestigung pro Schicht erhöht und zudem steigt auch die Oberflächengüte, da jede Schicht aus mindestens zwei Unterschichten mit geringerer Dicke besteht.

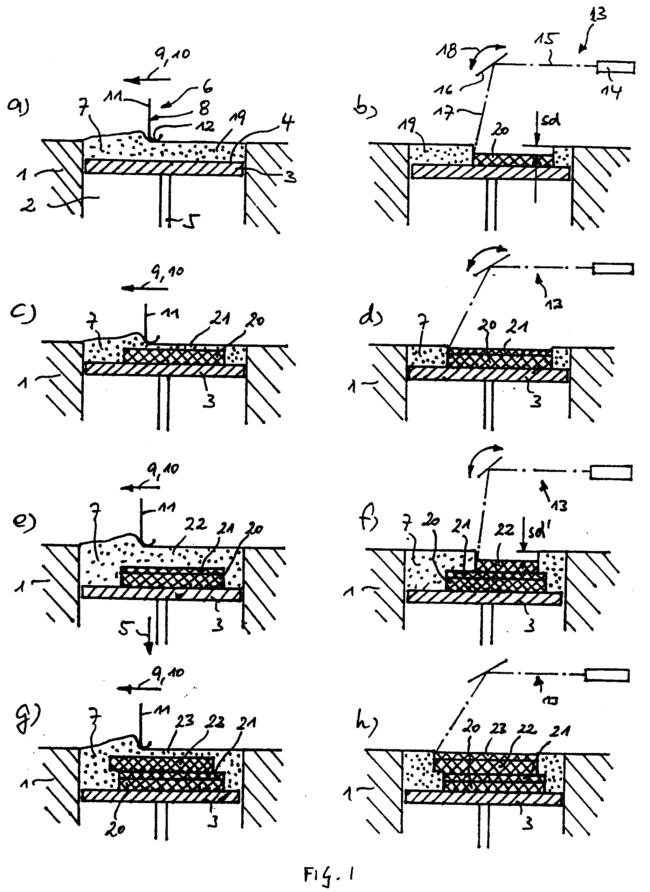

Die Erfindung wird im weiteren anhand eines Ausführungsbeispiels unter Bezug auf die Figur beschrieben. Die Figur zeigt die einzelnen Schritte a) bis h) des erfindungsgemäßen Verfahrens anhand einer schematisch dargestellten erfindungsgemäßen Vorrichtung.

Die erfindungsgemäße Vorrichtung weist einen im wesentlichen horizontal angeordneten Arbeitstisch 1 mit einem Loch in Form eines Ausschnittes 2 auf. Der Ausschnitt ist vorzugsweise kreisförmig mit einem Querschnitt, der größer ist als die größte Querschnittsfläche des herzustellenden Objekts. Der Ausschnitt 2 kann jedoch auch jede andere geeignete Form aufweisen. Im Ausschnitt 2 ist ein ebenfalls im wesentlichen horizontal angeordneter Träger 3 vorgesehen, der als Plattform mit ebener Oberfläche 4 und einer dem Ausschnitt 2 entsprechenden Form ausgebildet ist und mittels einer Höheneinstellvorrichtung 5 in Richtung im wesentlichen senkrecht zur Oberfläche 4 und zum Tisch 1 verschiebbar ist.

Oberhalb des Arbeitstisches ist eine Vorrichtung 6 zum Aufbringen einer Schicht eines pulverförmigen oder pastenförmigen Materials 7 auf den Träger 3 vorgesehen. Die Aufbringvorrichtung 6 weist ein schienenförmiges Profil 8 auf, das sich horizontal quer über den Ausschnitt 2 erstreckt und mittels einer Antriebsvorrichtung 9 in Richtung des Pfeils 10 parallel zur Tischoberfläche 4 und senkrecht zur Erstreckung des Profils 8 über den Ausschnitt 2 bewegbar ist. Das Profil 8 weist einen oberen, im wesentlichen senkrecht angeordneten ersten Bereich 11 und einen sich auf dessen Unterseite anschließenden, U-förmig umgebogenen rinnenförmigen zweiten Bereich 12 auf, der vorzugsweise etwas elastisch ausgebildet ist. An dem Profil können eine Heizvorrichtung in Form eines Heizdrahtes und eine das Profil in Vibration versetzende Rüttelvorrichtung, z.B. ein Vibrator, vorgesehen sein.

Ferner ist oberhalb des Arbeitstisches eine Bestrahlungsvorrichtung 13 mit einer Strahlungsquelle 14, beispielsweise einem Laser, angeordnet, die einen gerichteten Lichtstrahl 15 abgibt. Dieser wird über eine Ablenkeinrichtung 16, beispielsweise einen Drehspiegel, mit einem Antrieb 18 als abgelenkter Strahl 17 auf die Ebene des Arbeitstisches 1 abgelenkt.

Die Höheneinstellvorrichtung 5, die Antriebsvorrichtung 9 und der Antrieb 18 sind in bekannter Weise mit einer (nicht gezeigten) Steuerung zur Durchführung der im folgenden beschriebenen Schritte verbunden.

Als Material 7 kommt insbesondere niedrigschmelzendes bzw. thermoplastisches pulverförmiges Kunststoffmaterial wie Nylon, aber auch Metallpulver und Hybride, d.h. kunststoffüberzogene Metall- oder Keramikpulver, in Frage. Ferner eignen sich auch photopolymerisierbare pastenförmige Materialien.

Die einzelnen Schritte des erfindungsgemäßen Verfahrens sind in den Einzelfiguren a) bis h) dargestellt. Im ersten Schritt a) wird der Träger 3 mittels der Höheneinstellvorrichtung 5 in eine solche Höhenlage gebracht, daß die Oberfläche 4 um den Betrag einer Schichtdicke des herzustellenden Objekts unter der Oberfläche des Arbeitstisches 1 liegt. Dann wird der dadurch oberhalb des Trägers 3 entstehende abgesenkte Bereich mit dem Material 7 zu einer Schicht 19 aufgefüllt, indem eine vorbestimmte Menge des Materials mittels einer Bewegung des Profils 8 über den Ausschnitt 2 verteilt wird. Hierbei bewirkt der abgerundete federnde zweite Bereich 12 eine Glättung und oberflächliche Verdichtung des Materials, die durch die Rüttelvorrichtung noch verstärkt werden kann. Gleichzeitig kann mittels der Heizvorrichtung eine Vorheizung des Materials auf eine Temperatur unterhalb der Schmelztemperatur vorgenommen werden.

Im nächsten Schritt b) wird die Bestrahlungsvorrichtung 13 so gesteuert, daß der abgelenkte Strahl 17 nacheinander an allen dem Objekt entsprechenden Stellen der Schicht 19 auftrifft und dort das Material 7 verfestigt. Diese Verfestigung erfolgt bei pulverförmigem Material 7 in Form einer Sinterung, bei pastenförmigem Material in Form einer Photopolymerisation. Bei diesem Verfestigungsvorgang schrumpft das Material, sodaß die Dicke der Schicht 19 an den verfestigten Stellen 20 um das Schrumpfmaß sd geringer ist als an den nicht verfestigten Stellen.

Zum Ausgleich der Schrumpfung wird erfindungsgemäß im Schritt c) der Träger 3 noch nicht weiter abgesenkt, sondern bei unveränderter Stellung des Trägers 3 mittels der Aufbringvorrichtung 6 in gleicher Weise wie im Schritt a) an den verfestigten Stellen 20 eine weitere Schicht 21 des Materials aufgebracht, deren Dicke im wesentlichen dem Schrumpfmaß sd entspricht. Im Schritt d) wird diese Schicht 21 an denselben Stellen wie im Schritt b) nochmals mittels der Bestrahlungsvorrichtung 13 belichtet, sodaß die Schicht 21 in sich und mit der Schicht 20 zusammenverfestigt wird. Dabei schrumpft die Schicht 21 wiederum etwas, das Schrumpfmaß ist jedoch wegen der erheblich geringeren Ausgangsdicke der Schicht 21 wesentlich geringer als sd. Gegebenenfalls können bei unveränderter Stellung des Trägers 3 eine oder mehrere weitere Schichten aufgetragen und verfestigt werden.

Die zweite Belichtung im Schritt d) kann dabei mit anderen Parametern, z.B. mit veränderter Laserleistung, durchgeführt werden, um so die Dichte und Oberflächengüte der Schicht 21 weiter zu verbessern.

Im Schritt e) wird zunächst der Träger 3 mittels der Höhenstellvorrichtung um den Betrag der Dicke der nächsten Schicht des Objekts abgesenkt und in gleicher Weise wie im Schritt a) eine Schicht 22 des Materials 7 aufgetragen. Diese wird im Schritt f) wiederum an den der nächsten Schicht des Objekts entsprechenden Stellen verfestigt, wodurch ebenfalls eine Schrumpfung um das Maß sd' auftritt. Im Schritt g) wird bei unveränderter Stellung des Trägers 3 eine Materialschicht 23 mit der dem Schrumpfmaß sd' entsprechenden Dicke aufgetragen, die im Schritt h) wiederum an den gleichen Stellen wie im Schritt f) verfestigt wird.

Die weiteren Schichten des Objekts werden in analoger Weise hergestellt.

Das dargestellte Verfahren kann noch dadurch modifiziert werden, daß bei der jeweils zweiten Schicht 21,23 ein anderes Material, beispielsweise ein Pulver mit geringerer Korngröße verwendet wird, um die Dichte und Qualität der Oberfläche weiter zu verbessern. Ferner ist es möglich, das Verfahren unter Schutzgas durchzuführen und die Vorheizung der Materialschichten nicht mittels eines Heizdrahts am Profil 8, sondern mittels einer auf die Schichtoberfläche gerichteten Strahlungsheizung vorzunehmen. Schließlich ist es bei dem erfindungsgemäßen Verfahren auch möglich, die Auftragung des Materials 7 mittels anderer bekannter Vorrichtungen wie beispielsweise einer Walze, einer Streu- oder Streichvorrichtung oder einem Schieber, Besen, Wischer oder dgl. durchzuführen. Eine erfindungsgemäße Weiterbildung besteht zudem auch darin, die an den Rand des Ausschnittes 2 angrenzenden Materialbereiche ebenfalls zu verfestigen, sodaß gleichzeitig mit der Herstellung des Objekts ein das Material auf dem Träger 3 umhüllender Behälter aus verfestigtem Material entsteht.

## Patentansprüche

1. Verfahren zum Herstellen von dreidimensionalen Objekten, bei dem das Objekt schichtweise jeweils durch Aufbringen einer Schicht eines verfestigbaren Materials (7) und anschließendes Verfestigen dieser Schicht durch Bestrahlung an den dem Objekt entsprechenden Stellen mittels eines Lasers aufgebaut wird,
dadurch gekennzeichnet, daß nach dem Verfestigen einer Schicht (19) durch Aufbringen und Verteilen von zusätzlichem Material (7) durch eine Aufbringvorrichtung (6) eine zweite Materialschicht (21) mit einer im wesentlichen dem Schrumpfmaß (sd) der einen ersten Schicht (19) bei der Verfestigung entsprechenden Dicke aufgebracht wird und an denselben Stellen wie bei der einen ersten Schicht (19) durch Bestrahlen mittels des Lasers verfestigt wird.

2. Verfahren nach Anspruch 1,
dadurch gekennzeichnet, daß auf die zweite Materialschicht (21) eine oder mehrere zusätzliche Materialschichten aufgebracht und verfestigt werden.

3. Verfahren nach Anspruch 1 oder 2,
dadurch gekennzeichnet, daß die Schichten auf einen höhenverstellbaren Träger (3) aufgebracht werden und daß die Position des Trägers (3) erst nach der Verfestigung der zusätzlichen Schichten zur Bildung der nächsten Schicht des Objekts verstellt wird.

4. Verfahren nach einem der Ansprüche 1 bis 3,
dadurch gekennzeichnet, daß als Material (7) ein Pulvermaterial, insbesondere ein thermoplastisches Kunststoffpulver, verwendet wird.

5. Verfahren nach Anspruch 4,
dadurch gekennzeichnet, daß die Korngröße bzw. Korngrößenverteilung der zweiten oder der zusätzlichen Materialschichten (21) von derjenigen der ersten Schicht verschieden ist.

6. Verfahren nach Anspruch 4 oder 5,
dadurch gekennzeichnet, daß die Dichte des Pulvers (7) beim Aufbringen durch Rütteln oder Vibrieren vergrößert wird.

7. Verfahren nach einem der Ansprüche 1 bis 3,
dadurch gekennzeichnet, daß als Material (7) ein photopolymerisierbares pastenförmiges Material verwendet wird.

8. Verfahren nach einem der Ansprüche 1 bis 7,
dadurch gekennzeichnet, daß die Steuerung des Lasers (14), insbesondere die Laserleistung, bei der zweiten oder den zusätzlichen Materialschichten von derjenigen der ersten Schicht verschieden ist.

9. Verfahren nach einem der Ansprüche 1 bis 8,
dadurch gekennzeichnet, daß bei der Verfestigung jeder Schicht ebenfalls eine Verfestigung entlang eines einheitlichen geschlossenen Linienzuges vorgenommen wird, der die dem Objekt entsprechenden Stellen einschließt, so daß ein das Objekt umgebender Behälter erzeugt wird.

10. Vorrichtung zum Herstellen von dreidimensionalen Objekten, zur Durchführung des Verfahrens nach Anspruch 1, mit einem Träger (3), einer Vorrichtung (6) zum Aufbringen einer Schicht eines Materials auf den Träger (3) und einer Vorrichtung (13) zum Verfestigen der aufgebrachten Materialschicht,
wobei die Aufbringvorrichtung (6) ein auf seiner Unterseite abgebogenes Profil (8) sowie einen Antrieb (9) zum Bewegen des Profils (8) über den Träger (3) aufweist,
dadurch gekennzeichnet, daß
eine Rüttelvorrichtung zum Vibrieren des Profils (8) vorgesehen ist.

11. Vorrichtung nach Anspruch 10,
dadurch gekennzeichnet, daß das Profil (8) einen im wesentlichen senkrechten ersten Bereich (11) und einen an dessen dem Träger (3) gegenüberliegenden unteren Teil anschließenden, im wesentlichen U-bogenförmigen zweiten Bereich (12) aufweist.

12. Vorrichtung nach Anspruch 11,
dadurch gekennzeichnet, daß der zweite Bereich (12) federnd ausgebildet ist.

13. Vorrichtung nach Anspruch 11 oder 12,
dadurch gekennzeichnet, daß die Rüttelvorrichtung zum Vibrieren des zweiten Bereichs (12) vorgesehen ist.

14. Vorrichtung nach einem der Ansprüche 10 bis 13,
dadurch gekennzeichnet, daß eine Heizvorrichtung zum Heizen des Profils (8) vorgesehen ist.

## Claims

1. Method for producing three-dimensional objects, in which the object is built up layerwise in each case by depositing a layer of a solidifiable material (7) and subsequently solidifying this layer by irradiation at the places corresponding to the object by means of a laser, characterized in that, after the solidification of one layer (19), by depositing and distributing additional material (7) using a depositing device (6), a second material layer (21) with a thickness corresponding substantially to the amount of shrinkage (sd) of the one first layer (19) during the solidification is deposited and is solidified at the same places as with the one first layer (19) by irradiating by means of the laser.

2. Method according to Claim 1, characterized in that one or more additional material layers are deposited onto the second material layer (21) and solidified.

3. Method according to Claim 1 or 2, characterized in that the layers are deposited onto a height-adjustable carrier (3) and in that the position of the carrier (3) is not adjusted for the formation of the next layer of the object until after the solidification of the additional layers.

4. Method according to one of Claims 1 to 3, characterized in that the material (7) used is a powder material, in particular a thermoplastic plastic powder.

5. Method according to Claim 4, characterized in that the particle size or particle size distribution of the second or of the additional material layers (21) is different from that of the first layer.

6. Method according to Claim 4 or 5, characterized in that the density of the powder (7) is increased during the deposition by shaking or vibrating.

7. Method according to one of Claims 1 to 3, characterized in that the material (7) used is a photopolymerizable pasty material.

8. Method according to one of Claims 1 to 7, characterized in that the control of the laser (14), in particular the laser power, is different with the second or the additional material layers from that of the first layer.

9. Method according to one of Claims 1 to 8, characterized in that, during the solidification of each layer, a solidification along a uniform closed continuous line is likewise performed, which line encloses the places corresponding to the object so that a receptacle surrounding the object is produced.

10. Apparatus for producing three-dimensional objects, for carrying out the method according to Claim 1, having a carrier (3), a device (6) for depositing a layer of a material onto the carrier (3) and a device (13) for solidifying the deposited material layer, the depositing device (6) having a profile (8) bent off at its underside, as well as a drive (9) for moving the profile (8) over the carrier (3), characterized in that a shaking device for vibrating the profile (8) is provided.

11. Apparatus according to Claim 10, characterized in that the profile (8) has a substantially vertical first region (11) and a second region (12) bent substantially in a U-shape and adjoining the lower part, facing the carrier (3), of the first region.

12. Apparatus according to Claim 11, characterized in that the second region (12) is designed to be resilient.

13. Apparatus according to Claim 11 or 12, characterized in that the shaking device for vibrating the second region (12) is provided.

14. Apparatus according to one of Claims 10 to 13, characterized in that a heating device for heating the profile (8) is provided.

## Revendications

1. Procédé de production d'objets tridimensionnels dans lequel l'objet est produit couche après couche par application d'une couche d'un matériau pouvant être solidifié (7) puis solidification de cette couche par exposition à un rayonnement aux endroits correspondants de l'objet au moyen d'un laser, caractérisé en ce qu'après la solidification d'une couche (19), une deuxième couche de matériau (21) ayant une épaisseur correspondant sensiblement à la valeur de retrait (sd) de la première couche (19) est appliquée par application et répartition de matériau (7) supplémentaire à l'aide d'un dispositif d'application (6) et solidifiée aux mêmes endroits que la première couche (19) par exposition au rayonnement du laser.

2. Procédé selon la revendication 1, caractérisé en ce qu'une ou plusieurs couches supplémentaires de matériau sont appliquées et solidifiées par-dessus la deuxième couche de matériau (21).

3. Procédé selon la revendication 1 ou 2, caractérisé en ce que les couches sont appliquées sur un support (3) réglable en hauteur et en ce que la position du support (3) n'est modifiée qu'après la solidification des couches supplémentaires en vue de la formation de la couche suivante sur l'objet.

4. Procédé selon l'une ou l'ensemble des revendications 1 à 3, caractérisé en ce que le matériau (7) employé est un matériau en poudre, en particulier une poudre de matière synthétique thermoplastique.

5. Procédé selon la revendication 4, caractérisé en ce que la granulométrie ou la répartition granulométrique de la deuxième couche de matériau (21) ou des couches supplémentaires est différente de celle de la première couche.

6. Procédé selon la revendication 4 ou 5, caractérisé en ce que la densité de la poudre (7) est augmentée par agitation ou vibration lors de l'application.

7. Procédé selon l'une ou l'ensemble des revendications 1 à 3, caractérisé en ce que le matériau (7) employé est un matériau pâteux photopolymérisable.

8. Procédé selon l'une ou l'ensemble des revendications 1 à 7, caractérisé en ce que la commande du laser (14), et en particulier la puissance du laser, n'est pas la même pour la deuxième couche de matériau ou les couches supplémentaires que pour la première couche.

9. Procédé selon l'une ou l'ensemble des revendications 1 à 8, caractérisé en ce que lors de la solidification de chaque couche, une solidification est également effectuée le long d'un train de lignes uniforme qui enferme les points correspondants à l'objet de façon à produire une enceinte entourant l'objet.

10. Dispositif de production d'objets tridimensionnels destiné à la mise en oeuvre du procédé selon la revendication 1, avec un support (3), un dispositif (6) d'application d'une couche d'un matériau sur le support (3) et un dispositif (13) pour la Solidification de la couche de matériau appliquée, dans lequel le dispositif d'application (6) présente un profilé (8) recourbé sur sa face inférieure ainsi qu'un entraînement (9) destiné à déplacer le profilé (8) au-dessus du support (3), caractérisé en ce qu'un dispositif à secousses est prévu pour provoquer la vibration du profilé (8).

11. Dispositif selon la revendication 10, caractérisé en ce que le profilé (8) présente une première partie (11) sensiblement verticale et une deuxième partie (12) sensiblement en forme de U qui se raccorde à la partie inférieure et faisant face au support (3) de celle-ci.

12. Dispositif selon la revendication 11, caractérisé en ce que la deuxième partie (12) est élastique.

13. Dispositif selon la revendication 11 ou 12, caractérisé en ce que le dispositif à secousses est destiné à provoquer la vibration de la deuxième partie (12).

14. Dispositif selon l'une ou l'ensemble des revendications 10 à 13, caractérisé en ce qu'un dispositif de chauffage est prévu pour chauffer le profilé (8).
